(19) Europäisches Patentamt
European Patent Office
Office européen des brevets

(11) Veröffentlichungsnummer : **0 290 868 B1**

# (12) EUROPÄISCHE PATENTSCHRIFT

(45) Veröffentlichungstag der Patentschrift :
24.04.91 Patentblatt 91/17

(51) Int. Cl.⁵ : **B65G 15/12, B65G 15/58, B65G 21/20, B65G 15/42**

(21) Anmeldenummer : 88106750.8

(22) Anmeldetag : 27.04.88

(54) Vorrichtung zum positionstreuen Transport von Behältnissen.

(30) Priorität : 11.05.87 CH 1783/87

(43) Veröffentlichungstag der Anmeldung :
17.11.88 Patentblatt 88/46

(45) Bekanntmachung des Hinweises auf die
Patenterteilung :
24.04.91 Patentblatt 91/17

(84) Benannte Vertragsstaaten :
AT BE CH DE ES FR GB GR IT LI NL SE

(56) Entgegenhaltungen :
DE-A- 2 219 354
FR-A- 1 046 037
FR-A- 2 342 918
US-A- 3 523 602

(73) Patentinhaber : **Präzisions-Werkzeuge AG**
**Breitenhofstrasse 7**
**CH-8630 Rüti (CH)**

(72) Erfinder : **Güntensperger, August**
**Bergacherstrasse 12**
**CH-8630 Rüti (CH)**

(74) Vertreter : **Troesch, Hans Alfred, Dr. sc. techn.**
**et al**
**Troesch Scheidegger Werner AG**
**Siewerdtstrasse 95**
**CH-8050 Zürich (CH)**

**Beschreibung**

Die Erfinsung betrifft eine Vorrichtung zum positionstreuen Transport von Behältnissen mit einer Transportbandanordnung, umfassend zwei parallel nebeneinander angeordnete Endlostromsportbänder und eine Verwendung der Vorrichtung für eine Dosennahtbeschichtungsanlage.

Werden Behältnisse auf Transportvorrichtungen, wie Transport- oder Förderbändern, bewegt, so können diese Behältnisse durch die Trägheitskräfte in ihrer relativen Position zur Transportvorrichtung mehr oder weniger stark verschoben werden.

In speziellen Verhältnissen, wie dies z.B. bei Beschichtungsanlagen für die Beschichtung von Dosennähten der Fall ist, kommt dem positionstreuen Transport der Dosen zentrale Bedeutung zu. Insbesondere bei kontinuierlichen Anlagen werden die Dosen nach Durchlaufen der Nahtschweissanlage mit einer bestimmten Position der Naht auf das Transportsystem der Nahtbeschichtungsanlage gegeben. Auf diesem System müssen die Dosen durch die Beschichtungszone hindurch bis zu einer anschliessenden Wärmebehandlungszone in exakt der eingegebenen Position transportiert werden, damit die Beschichtung der Naht wie auch die anschliessende Aushärtung der Beschichtung durch die in ihrer Position stationären Beschichtungsdüse resp. den stationären Wärmestrahler sich-ergestellt ist.

Bei bekannten Transportsystemen besteht insbesondere bei metallenen Behältnissen, wie dies beispielsweise Dosen sind, oft das Problem, dass die Behältnisse nicht erschütterungsfrei eingegeben werden können, was bereits zu Beginn des Transports zu Positionsveränderungen der Behältnisse führt. Ein weiterer Nachteil besteht teilweise darin, dass diese meist nur für eine spezielle Behältnisgrösse ausgelegt sind. Bei Veränderung der Dimension des Behältnisses, wie beispielsweise des Durchmessers einer Dose, muss entsprechend eine Umstellung am Transportsystem vorgenommen werden.

Speziell bei Dosennahtbeschichtungsanlagen werden heute vermehrt Endlosschlauch- oder Rundriemen verwendet, welche auch das Fördern von Behältnissen mit in gewissem Umfang unterschiedlichen Dimensionen zulassen. Da diese Riemen meist aus gummiartigen Materialien hergestellt sind, ist auch der erschütterungsfreie Transport gewährleistet. Allerdings neigen diese Rundriemen zum Verdrehen und zudem besteht im Bereich des Antriebes die Tendenz zu Schlupf. Insbesondere problematisch ist auch die Verschweissung derartiger Rund- und Schlauchriemen zu einem Endlosriemen. Aufgrund der geschilderten Problematik ist auch bei Verwendung dieser Transportsysteme der positionstreue Transport bei längerem Betrieb nicht sichergestellt.

Aus der US-A-3 523 602 ist eine Transportvorrichtung für den Transport von Büchsen beschrieben, mit zwei parallel nebeneinander angeordneter Endlostransportbänder, sowie einer Magnetanordnung, die zwischen den Transportbändern vorgesehen ist. Die Transportbänder weisen eine flache obere Transportfläche auf mit seitlich abfallenden Flanken, die von der oberen Ebene durch Längskanten getrennt sind. Beim Transport liegen die Büchen, unabhängig von ihrer Grösse und Dimensionierung entlang der genannten Kanten auf den Transportbändern auf. Entsprechend besteht auch bei dieser Vorrichtung das oben gennante Problem, dass die Vorrichtung für eine spezielle Dosengrösse ausgelegt werden muss, ansonsten der Transport unterschiedlich dimensionierter Büchsen Keinesfalls positionstreugewährleistet ist.

Das Ziel der Erfindung ist es daher, eine Vorrichtung zu schaffen, mit welcher Behältnisse unterschiedlicher Dimemsionen, wie beispielsweise Dosen mit verschiedenen Durchmessern, positionstreu transportiert werden können, ohne die iben geschilderten Nachteile.

Diese Aufgabe wird erfindungsgemäss durch eine Vorrichtung gemäss dem Wortlaut von mindestens einem der Ansprüche, insbesondere von Anspruch 1, gelöst.

Die erfindungsgemäss beschriebene Vorrichtung umfasst dabei eine endlose Flachtransportbandanordnung mit zwei parallelen konvexen Tragflächen, wobei diese konvexen Flächen quer zur Tranportrichtung im wesentlichen stetig gekrümmt resp. gebogen sind.

Vorzugsweise ist dabei der Krümmungsradius der beiden konvexen Tragflächen wesentlich grösser als die Dicke der Flachtransportbandanordnung, wodurch die Gefahr von Verdrehen ausgeschaltet wird und ein grosser Bereich verschieden grosser und/oder -geformter Behältnisse ohne Umstellmanipulationen gehandhabt werden kann.

In einer bevorzugten Ausführungsvariante der Erfindung umfasst die Flachtransportbandanordnung zwei Flachtransportbänder, die parallel zueinander mit gleicher Geschwindigkeit laufend angeordnet sind und die je eine konvexe Tragfläche umfassen. Die beiden Flachtransportbänder sind dabei vorzugsweise in einer Ebene liegend angeordnet.

Um den Reibungskoeffizienten zwischen den konvexen Tragflächen und den Behältnissen zu vergrössern und damit die Positionstreue noch besser zu gewährleisten, werden die konvexen Tragflächen profiliert.

Es ist im weiteren wichtig, dass der Antrieb der Vorrichtung schlupffrei beherrscht wird. So ist es bei getrennten Bändern wesentlich, diese mit gleicher Geschwindigkeit anzutreben. Hierfür wird vorgesehen, die der konvexen Tragfläche abgekehrte Fläche der Transportbandanordnung zu profilieren oder zu perforieren, um eine optimale Kopplung durch formschlüssiges Greifen in eine Antriebsrollenanordnung zu garantieren.

Um den Bereich gehandhabter Behältnisdimensionen und/oder -Formen weiter zu erhöhen, wird weiter vorgeschlagen, dass bei Verwendung von zwei Flachtransportbändern mindestens eines der Transportbänder seitlich verschiebbar angeordnet ist. In diesem Fall kann beispielsweise je nach Durchmesser einer zu transportierenden Dose der Abstand zwischen den Transportbändern, falls zusätzlich nötig, vergrössert oder verkleinert werden.

Dieselbe Problemstellung kann bei Verwendung von zwei Transportbändern auch dadurch gelöst werden, dass mindestens ein Transportband um eine parallel zur Transportrichtung verlaufende Achse schwenkbar gelagert ist. Je nach Grösse des Behältnisses können die Transportbänder nun gegeneinander oder voneinander geschwenkt werden.

Es ist weiter oft wichtig, dass Transportbänder entlang der Transportrichtung nicht seitlich, beispielsweise auf halber Distanz zwischen zwei Rollen ausscheren, da ansonsten durch Verscheren des Behältnisses dessen Position verändert wird. Dies wird durch Anbringen von Führungsvorrichtungen, wie beispielsweise von Führungsschienen, entlang der Transportbänder verhindert.

Im weiteren wird vorgeschlagen, die konvexen Tragflächen durch längs der Transportbandanordnung aneinandergereihte Segmente zu bilden, die vorzugsweise quer zur Transportrichtung schwenkbar sind. Die konvexen Tragflächen passen sich dann unmittelbar jedem Behältnis selbsttätig optimal an. Dadurch werden Behältnisse durch ihr Eigengewicht und den an ihrer Oberfläche abrollenden Segmenten optimal gehalten.

Besonders bei hohen Transportgeschwindigkeiten und -Dichten der Behältnisse muss ein "Rutschen" der Behältnisse weitgehendst verhindert werden. Aus diesem Grunde wird weiter vorgeschlagen, dass ferromagnetische Behältnisse durch eine Magnetanordnung auf die Tragflächen gezogen werden.

Mit einer solchen Magnetanordnung kann die Transportbandanordnung auch so angeordnet werden, dass ferromagnetische Behältnisse am Transportband hängend transportiert werden.

Ausführungsvarianten hierzu bestehen darin, die Tragfläche selbst magnetisch auszubilden oder Magnete in den Bereich der Transportflächen einzubauen.

Falls stärkere Magnete, wie beispielsweise Elektromagnete, erzeugt werden oder eine Magnetisierung der Tragfläche nicht möglich ist, wird in einer weiteren Ausführungsvariante die Anordnung von stationären Magneten auf der den Tragflächen abgekehrten Seite der Transportbandanordnung vorgeschlagen oder zwischen den Tragflächen. Um bei hängendem Transport von ferromagnetischen Behältnissen ein Durchhängen der Transportbandanordnung zu verhindern, wird vorgeschlagen, an oder in die Transportbandanordnung eine ferromagnetische Anordnung, wie beispielsweise Drähte oder Saiten, einzubauen. Dadurch wird die Transportbandanordnung durch Magnete, auf der den Tragflächen abgekehrten Seite angeordnet, auf eine Unterlage, wie beispielsweise eine Führungsschiene, gezogen.

Falls zwei Transportbänder vorgesehen sind, wird vorgeschlagen, je Magnete an den beiden den Tragflächen abgekehrten Bereichen der Transportbänder anzuordnen, wobei zwei quer zur Transportrichtung gegenüberliegende Magnete vorzugsweise umgekehrt gepolt sind. Bei gleicher Polung und damit Bildung zweier unabhängiger Magnetkreise hat sich gezeigt, insbesondere bei Dosen, dass eine Tendenz zu Kippbewegungen der Dosen besteht, vermutlich aufgrund verschiedener Kräfte beidseits der Dosen, während bei ungleicher Polarität diese Kippbewegung wegfällt. Dann ergibt sich nämlich ein einziger magnetischer Kreis pro Magnetpaar, der sich über die Dose schliesst.

Um einen möglichst wirkungsvollen, verlustarmen Magnetkreis zu schaffen, wird weiter vorgeschlagen, die den Transportbandflächen abgekehrten Pole der Magnete zur Bildung einer U-Magnetanordnung zu verbinden. Die Schenkelpole dieses U-Magnetes liegen je im Bereich der Tragflächen, auf deren abgekehrten Seiten.

Vorzugsweise sind die verwendeten Magnete Permanentmagnete.

Die beschriebene Vorrichtung zum positionstreuen Transport von Behältnissen sowie die verschiedenen Ausführungsvarianten eignen sich besonders für den Transport von Dosen in einer Dosennahtbeschichtungsanlage. Auch an Dosenschweiss-, Form- etc. und an anderen Behältnisbearbeitungsanlagen kann die erwähnte Vorrichtung eingesetzt werden.

Anschliessend wird die erfindungsgemässe Vorrichtung anhand von bevorzugten Beispielen einer Flachtransportbandanordnung für den Transport von Dosen, bestehend aus zwei nebeneinander liegenden Transportbändern, beschrieben. Im ersten Ausführungsbeispiel ist dabei die Transportbandanordnung so gewählt, dass Metalldosen, durch Magnete angezogen, an den Transportbändern hängend, transportiert werden. Die Ausführungsbeispiele werden anhand von Figuren beschrieben, in welchen :

Fig. 1 schematisch eine erfindungsgemässe Flachtransportbandanordnung für den Transport von Dosen in Seitenansicht zeigt,

Fig. 2 die Transportbandanordnung gemäss Fig. 1 von unten gesehen darstellt,

Fig. 3 einen Querschnitt durch die Anordnung gemäss Fig. 1 entlang der Schnittlinie III-III zeigt,

Fig. 4, Fig. 4a schematisch eine Antriebsanordnung für ein Transportband gemäss Fig. 1 zeigen,
Fig. 5, Fig. 5a eine weitere Variante eines Antriebes gemäss Fig. 4, 4a zeigen,
Fig. 6 zweinebeneinander liegende Transportbänder im Querschnitt zeigt, wobei ein Transportband seitlich verschiebbar angeordnet ist,
Fig. 7 die beiden nebeneinander liegenden Transportbänder im Querschnitt zeigt, wobei beide Transportbänder seitlich verschiebbar angeordnet sind,
Fig. 8 die beiden nebeneinander liegenden Transportbänder im Querschnitt zeigt, wobei die beiden Transportbänder um eine parallel zur Transportrichtung verlaufenden Achse schwenkbar gelagert sind,
Fig. 9 ein Transportband in Perspektive zeigt, bei welchem die Tragfläche segmentiert ist,
Fig. 10 das Transportband von Fig. 9 im Längsschnitt zeigt,
Fig. 11 ein einzelnes Segment des Transportbandes von Fig. 9 zeigt,
Fig. 12 zwei nebeneinander liegende segmentierte Transportbänder im Querschnitt in ausgelenkter Position zeigt und
Fig. 13 bis 15 die Anordnung von Magneten relativ zu zwei nebeneinander liegenden Transportbändern zeigt.

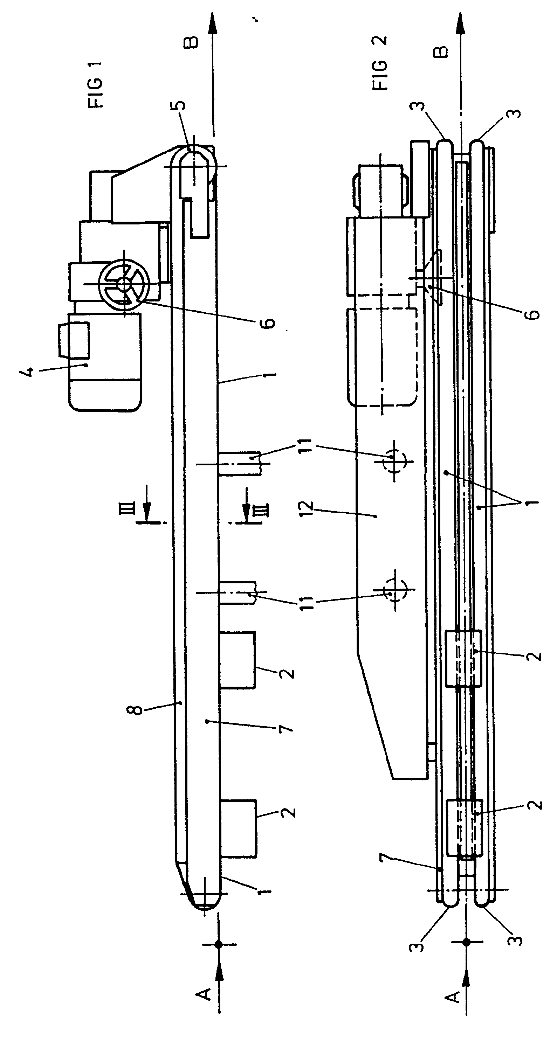

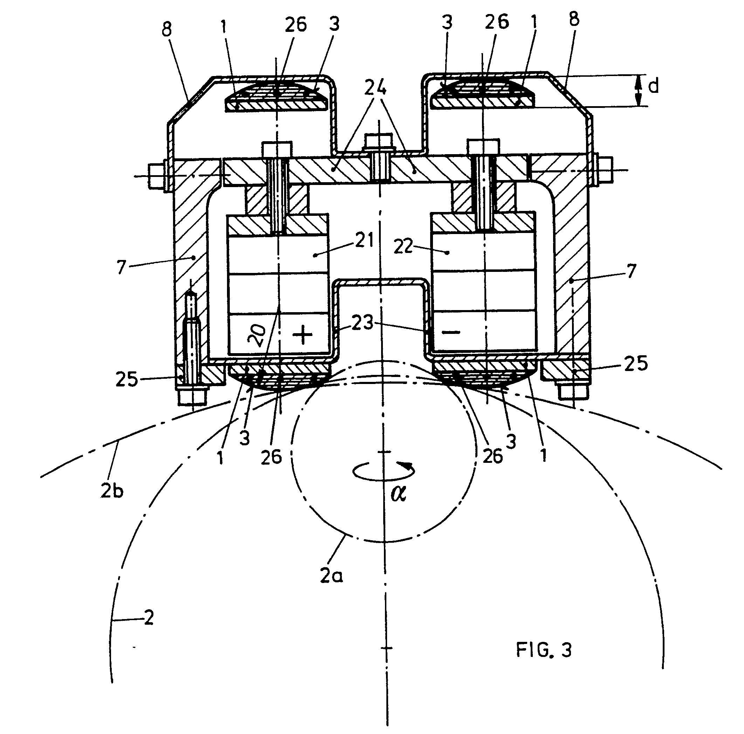

Gemäss den Fig. 1 und 2 umfasst eine Flachtransportbandanordnung zwei Transportbänder 1 für den Transport von Dosen 2. Die Flachtransportbänder 1 sind dabei derart angeordnet, dass die Dosen 2, durch Magnete angezogen, an ihnen hängend transportiert werden. Auf die Anordnung der Magnete wird später eingegangen. In Fig. 1 ist eine Seitenansicht und in Fig. 2 eine Ansicht von unten gesehen dargestellt.

Die beiden Flachtransportbänder 1 mit je konvexen Tragflächen 3 werden durch einen Antriebsmotor 4 über Antriebsrollen 5 angetrieben. Der Antriebsmotor 4 kann über eine Getriebevorrichtung 6 stufenlos in seiner Geschwindigkeit verstellt werden.

Die Transportbänder 1 werden durch seitliche Verschalungen 7 gegen seitliche Auslenkungen und durch eine Abdeckung 8 geschützt. Ueber Stützen 11 und eine Halterplatte 12 (in Fig. 1 nicht dargestellt) wird die ganze Transportbandanordnung, inklusive dem Antrieb, in genauer Position fixiert.

Die Dosen 2 gelangen nun beispielsweise von einer Dosennahtschweissmaschine in einer Zone A auf die in den Fig. 1 und 2 gezeigten Transportbänder 1 und werden durch Magnete (nicht sichtbar) an die Bänder 1 gezogen. Aufgrund der konvex ausgebildeten Tragflächen 3 der Bänder 1 werden die Dosen 2 in der eingegebenen Position stabil gehalten bis zur Uebergabe an eine der Transportbandanordnung nachfolgenden Zone B, wie beispielsweise an eine Wärmebehandlungsanordnung. Damit die Aufnahme der Dose von einer vorangehenden Zone A positionsstreu erfolgen kann, sind die Geschwindigkeiten einer vorangehenden Transportbandanordnung und der erfindungsgemässen Anordnung vorzugsweise synchron.

Während des Transports der Dosen 2 mittels der Transportanordnung ist es wesentlich, dass die beiden nebeneinander liegenden Transportbänder 1 mit gleicher Geschwindigkeit laufen, damit die Positionstreue eingehalten wird. Am Ende der dargestellten Flachtransportbandanordnung wird die Dose 2 an eine nachfolgende Zone B übergeben. Falls in dieser Zone B der Transport weiterhin positionstreu erfolgen soll, sind auch hier die Geschwindigkeiten der beiden hier aufeinandertreffenden Transportsysteme vorzugsweise synchron.

In Fig. 3 ist ein Querschnitt durch die Flachtransportbandanordnung gemäss der Schnittlinie III-III von Fig. 1 dargestellt.

Eine Metalldose 2 liegt auf den Transportbändern 1, auf ihren konvexen Tragflächen 3, auf. Es ist ersichtlich, dass sich beispielsweise Dosen 2 mit extrem unterschiedlichen Durchmessern 2a (z.B. 45 mm) und 2b (z.B. 330 mm) positionieren und transportieren lassen. Der Radius 20 der konvexen Tragflächen 3 ist wesentlich grösser als die Dicke d der Transportbänder 1, u.a. damit auch die Laufruhe der Transportbänder 1 gewährleistet ist.

Die Metalldose 2 wird durch Magnete 21 und 22 an die Transportbänder 1 gezogen und dort gehalten. Damit keine Kippbewegung der Dose 2, wie mit α dargestellt, auf dem Transportband erfolgt, sind die Magnete 21 und 22 mit entgegengesetzter Polarität angeordnet.

Zwischen den Magneten 21 und 22 und den Transportbändern 1 ist eine Verschalung 23 aus nicht magnetisierbarem Material, wie beispielsweise aus antimagnetischem Blech, angeordnet.

Auf den den Transportbändern 1 entgegengesetzten Polseiten der Magnete 21 und 22 sind die beiden Magnete als Schenkel durch ein Transportbandgehäuse 24, an welchem die beiden Magnete 21 und 22 über Schrauben befestigt sind, untereinander ferromagnetisch verbunden, womit eine U-Magnetanordnung 21, 22, 24 entsteht. Seitlich der Magnete 21 und 22 und der Transportbänder 1 sind am Gehäuse 24 die beiden seitlichen Verschalungen 7 aus nicht ferromagnetischem Material vorgesehen. An den beiden Verschalungen 7 angebracht, sind Führungsschienen 25, die ein seitliches Auslenken der Transportbänder 1 verhindern.

Am oberen Teil des Gehäuses 24 ist die Abdeckhaube 8 montiert, welche die beiden zurücklaufenden Transportbandschenkel 1 abdeckt und schützt.

Damit im gezeigten Ausführungsbeispiel des hängenden Transportes von Dosen die beiden Transportbänder 1, bedingt durch ihr Eigen- und das Dosengewicht, nicht durchhängen, sind längsverlaufende ferromagnetische Saiten 26 im Transportband eingearbeitet. Bedingt durch diese ferromagnetischen Saiten 26 werden nun die beiden Transportbänder 1 durch die Magnete 21 und 22 auf die nicht ferromagnetische Verschalung 23 als Unterlage gezogen.

Analoge Transportbandanordnungen, welche Behältnisse, aufliegend, positionstreu zu transportieren haben, sind nicht gezwungenermassen auf die Verwendung von Magneten angewiesen. Entsprechend können in diesem Fall auch nicht ferromagnetische Behältnisse positionstreu transportiert werden.

Je nach äusserer Ausbildung des Behältnisses kann es angezeigt sein, wenn die konvexen Tragflächen zur Vergrösserung des Reibungskoeffizienten zwischen dem Behältnis und der Tragfläche zusätzlich profiliert oder mit einem rutschfesten Material beschichtet sind.

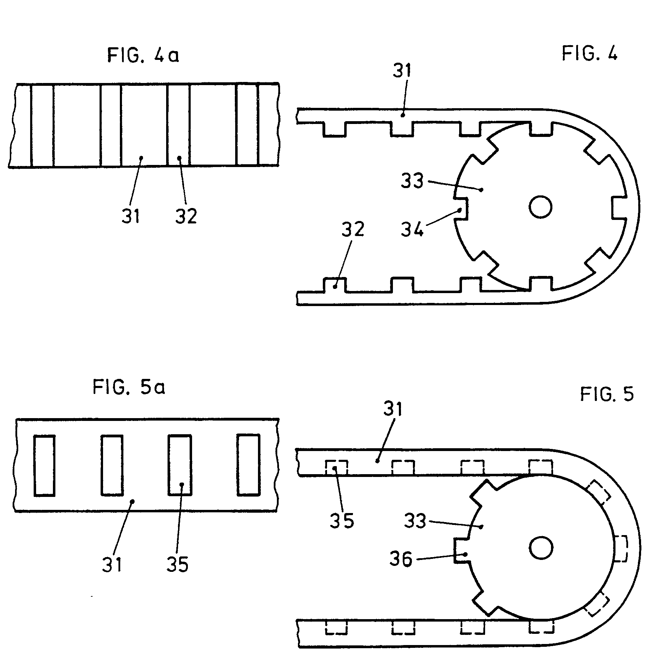

In den Fig. 4, 4a, 5 und 5a sind erfindungsgemässe Vorrichtungen gezeigt für den formschlüssigen Antrieb eines Transportbandes, wie z.B. in den Fig. 1 bis 3 dargestellt.

In Fig. 4 sind quer an einem Transportband 31, im Längsschnitt und im Bereich des Antriebes gezeigt, Noppen 32 auf der der Tragfläche gegenüberliegenden Antriebsseite vorgesehen. Die Noppen 32 greifen, an einem Antriebsrad oder einer -welle 33, in entsprechend vorgesehene Nuten 34 ein. Beim Drehen des Rades 33 ist somit Schlupf des Transportbandes 31 unmöglich.

In Fig. 4a ist ein Ausschnitt des Transportbandes 31, auf die Antriebsseite betrachtet, gezeigt, wobei die Längsausdehnung der Noppen 32 quer zum Transportband 31 ersichtlich ist. Sie können aber auch kürzer ausgebildet sein, zentral oder seitlich angeordnet sein.

Analog ist in Fig. 5 auf der Antriebsseite des Transportbandes 31, wiederum im Längsschnitt und im Bereich des Antriebes gezeigt, eine Profilierung mit Aussparungen 35 gezeigt. In die Aussparungen 35 greifen entsprechende Zahnungen 36 am Rad 33 ein. Wiederum ist der rutschsichere, formschlüssige Antrieb gewährleistet.

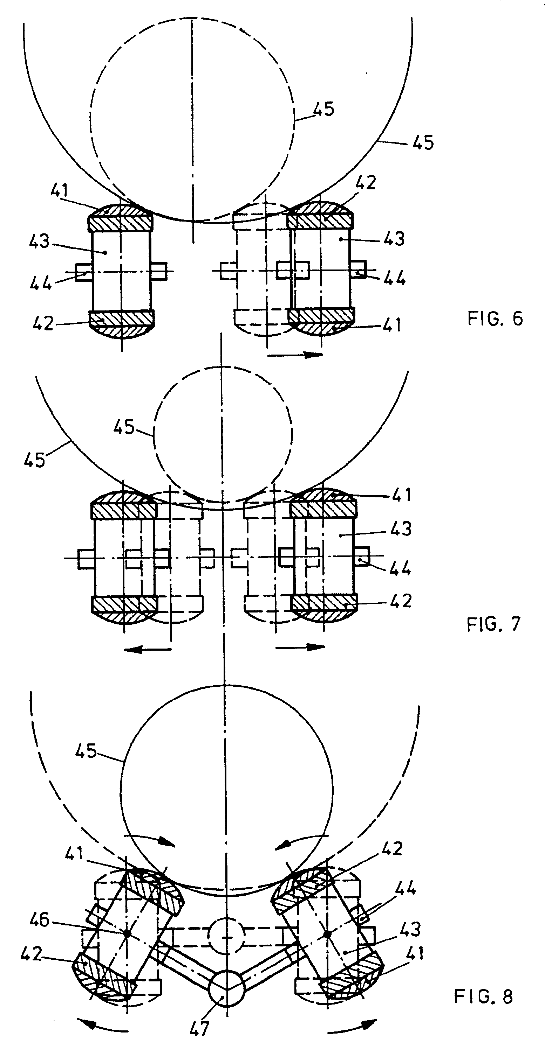

In den Fig. 6 bis 8 ist dargestellt, wie zwei nebeneinander liegende Transportbänder relativ zueinander verschoben resp. verschwenkt werden.

In Fig. 6 ist ein Transportband 41, wie ein Band 1 gemäss den Fig. 1 bis 3 starr gelagert, während das zweite Transportband 41 seitlich verschiebbar gelagert ist. Die entsprechenden Antriebsmechanismen, bestehend aus Antriebsrolle oder -welle 43 mit Antriebsachse 44 sowie dem formschlüssigen Eingriff 42, sind analog beim einen Transportband 41 starr und beim anderen seitlich verschiebbar ausgebildet. Die eine Position der verschiebbaren Teile ist gestrichelt dargestellt und die andere mit ausgezogenen Linien. Je nach relativer Lage der beiden Transportbänder 41 lassen sich Behältnisse 45 unterschiedlicher Grösse transportieren.

In Fig. 7 sind beide Transportbänder 41 mit den entsprechenden Antrieben, bestehend aus Rolle 43 mit Achse 44 und formschlüssigen Eingriffen 42, seitlich verschiebbar gelagert. Wiederum ist die eine Position gestrichelt und die andere mit ausgezogenen Linien dargestellt. Auch hier lassen sich Behältnisse 45 mit stark unterschiedlichem Durchmesser transportieren.

In Fig. 8 sind die beiden Transportbänder 41 um eine parallel zur Transportrichtung verlaufende Achse 46 schwenkbar gelagert. Ebenfalls die dazu gehörigen Antriebe werden mitgeschwenkt, wobei die beiden Antriebsachsen 44 beispielsweise über eine geeignete drehstarre Ausgleichskupplung 47 miteinander verbunden sein können, damit der Antrieb stets, ob in horizontaler oder geschwenkter Position, von einem einzigen Antriebsmotor über eine Welle erfolgen kann. Die horizontale Ausgangslage der Transportbänder 41 ist gestrichelt und die geschwenkte Position mit ausgezogenen Linien dargestellt.

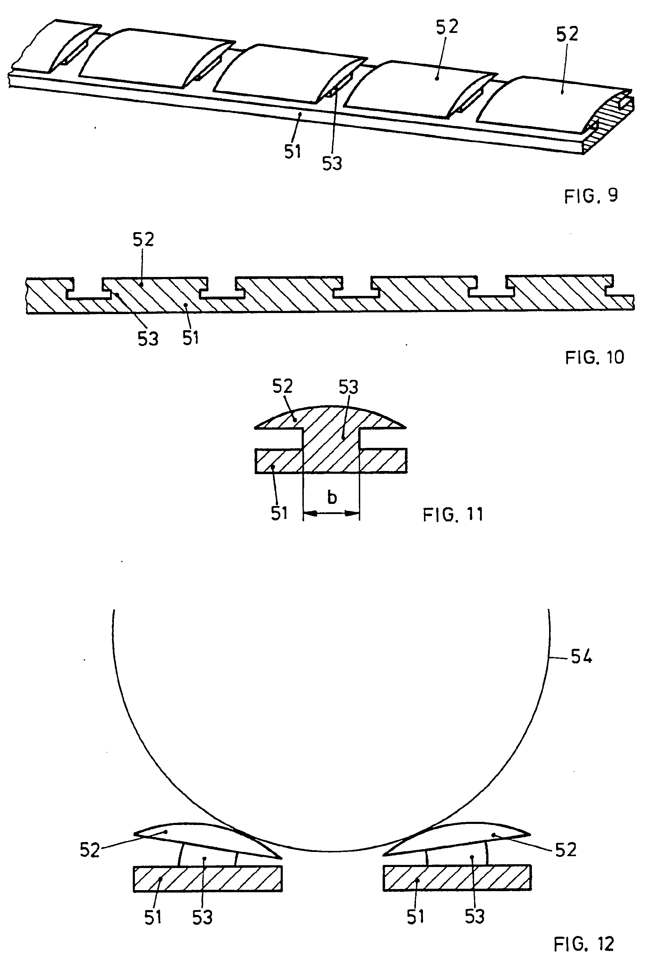

In den Fig. 9 bis 12 ist ein Transportband, z.B. gemäss den Fig. 1 bis 8 ausgebildet, dargestellt, dessen Tragfläche durch aneinandergereihte Segmente gebildet wird.

In Fig. 9 ist ein Transportband 51 in Perspektive gezeigt, mit einzelnen aneinandergereihten Segmenten 52. Die Segmente 52 sind an ihrer Oberfläche konvex ausgebildet, um die Tragflächen zum Transport der Behältnisse zu bilden. Die Segmente 52 sind über einen Schaft 53 auf dem Transportband 51 gelagert.

In Fig. 10 ist dasselbe Transportband 51 im Längsschnitt gezeigt, wobei wieder die Segmente 52, aneinandergereiht angeordnet, je über den Schaft 53 mit dem Transportband 51 verbunden sind.

In Fig. 11 ist ein einzelnes Segment 52 im Querschnitt gezeigt, wie es über den Schaft 53 mit dem Transportband 51 verbunden ist. Damit die Segmente 52 relativ zum Transportband 51 seitlich schwenkbar sind, ist ein Drehen oder eine Deformation des Schaftes 53 notwendig. Sind, wie im gezeigten Beispiel, die drei Teile – Transportband 51, Segment 52 und Schaft 53 – aus ein und demselben Material gefertigt, so ist vorzugsweise ein gummiartiges deformierbares Material zu verwenden. Je nach dem Durchmesser b und der Elastizität des gewählten Materials ist das Segment 52 weniger oder stärker seitlich ausschwenkbar resp. deformierbar auf dem Transportband 51 gelagert. Falls steife Materialien verwendet werden, ist der Schaft 53 in einem Lager des Transportbandes angeordnet, um dessen Achse der Schaft 53 und damit das Segment 52 schwenkbar auf dem Transportband gelagert sind.

In Fig. 12 sind zwei parallel nebeneinander liegende segmentierte Transportbänder im Querschnitt gezeigt.

Durch das Eigengewicht der auf den beiden Segmenten 52 aufliegenden Dose 54 und/oder allenfalls Magnetkräfte wird der Schaft 53 deformiert, was zu einer Schwenkbewegung der Segmente 52 führt. Damit ist sichergestellt, dass sich die Tragfläche an den Segmenten 52, immer optimal den Dimensionen von Behältnissen anpassen kann, ganz unabhängig davon, in welcher Reihenfolge sich verschiedenartige Behältnisse folgen.

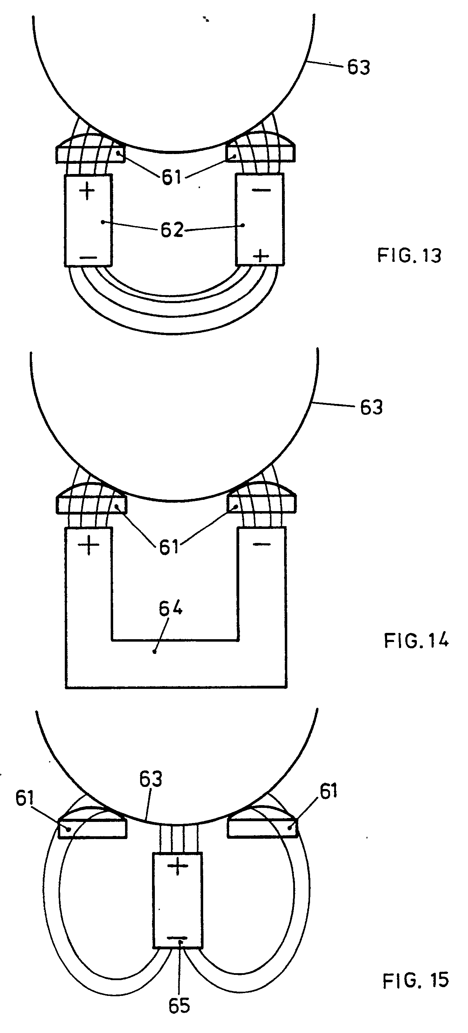

In den Fig. 13 bis 15 sind zwei nebeneinander liegende erfindungsgemässe Transportbänder mit verschiedenen Anordnungen von Magneten im Querschnitt quer zur Transportrichtung dargestellt.

In Fig. 13 ist je an der der kovexen Tragfläche abgekehrten Antriebsseite der beiden nebeneinander liegenden Transportbändern 61 ein Magnet 62 angeordnet. Die beiden Magnete 62 sind dabei so angeordnet, dass die bei der Antriebsseite der beiden Transportbänder 61 liegenden Pole einander entgegengesetzt sind. Auf diese Art und Weise entsteht ein einziges Magnetfeld, welches durch ein ferromagnetisches Behältnis 63 hindurchverläuft und dieses auf die Tragflächen der Transportbänder 61 zieht.

Wie in Fig. 14 dargestellt, werden diese Magnete vorzugsweise durch einen U-Magneten 64 gebildet.

In Fig. 15 ist zwischen den beiden erfindungsgemässen Transportbändern 61 liegend ein einziger Magnet 65 angeordnet.

Die in den Fig. 1 bis 15 dargestellten Ausführungsbeispiele wurden vorzugsweise für den Transport von runden Behältnissen, wie beispielsweise Dosen, beschrieben. Aehnliche Ausführungen der erfindungsgemässen Vorrichtung sind auch geeignet, um x-beliebige Behältnisse positionstreu zu transportieren. Dies gilt insbesondere auch bei der Verwendung von Magnetanordnungen, wo x-beliebige ferromagnetische Behältnisse positionstreu transportiert werden können.

**Ansprüche**

1. Vorrichtung zum positionstreuen Transport von Behältnissen mit einer Transportbanordnung, umfassend zwei parallel nebeneinander angeordnete Endlostransportbänder, dadurch gekennzeichnet, dass zwei Flachtransportbänber (1) mit parallelen, konvexen Tragflächen (3) zur Berücksichtigung unterschiedlicher Querschnittskonturen der Behältnisse vorgesehen sind, wobei die konvexen Tragflächen (3) quer zur Transportrichtung im wesentlichen stetig gekrümmt sind.

2. Vorrichtung nach Anspruch 1, dadurch gekennzeichnet, dass der Krümmungsradius (20) der konvexen Tragflächen (3) wesentlich grösser ist als die Dicke (d) der Flachtransportbandanordnung (1) im Bereich der Tragflächen (3).

3. Vorrichtung nach Anspruch 1 oder 2, dadurch gekennzeichnet, dass die Flachtransportbandanordnung zwei Flachtransportbänder (1) umfasst, die parallel zueinander, dabei vorzugsweise in einer Ebene liegend, angeordnet sind, je konvexe Tragfächen (3) umfasen und mit gleicher Geschwindigkeit laufen.

4. Vorrichtung nach den Ansprüchen 1, 2 oder 3, dadurch gekennzeichnet, dass die konvexen Tragflächen (3) profiliert sind.

5. Vorrichtung nach den Ansprüchen 1, 2, 3 oder 4, dadurch gekennzeichnet, dass mindestens eine den konvexen Tragflächen (3) abgekehrte Fläche (32, 35) der Flachtransportbandanordnung formschlüssig in mindestens eine Antriebsrolle (33) greift.

6. Vorrichtung nach Anspruch 3, dadurch gekennzeichnet, dass mindestens ein Flachtransportband (41) quer zur Transportrichtung seitlich verschiebbar ist.

7. Vorrichtung nach Anspruch 3 oder 6, dadurch gekennzeichnet, dass mindestens ein Transportband (41) um eine parallel zur Transportrichtung verlaufende Achse (46) schwenkbar gelagert ist.

8. Vorrichtung nach den Ansprüchen 3 bis 7, dadurch gekennzeichnet, dass seitlich zu den Transportbändern Führungsvorrichtungen (25) angeordnet sind, die ein örtliches seitliches Auslenken der Transportbänder (1) quer zur Transportrichtung verhindern.

9. Vorrichtung nach den Ansprüchen 1 bis 8, dadurch gekennzeichnet, dass die konvexen Tragflächen durch längs der Flachtransportbandanordnung (51) aneinandergereihte Segmente (52) gebildet sind.

10. Vorrichtung nach Anspruch 9, dadurch gekennzeichnet, dass die Segmente (52) quer zur Transportrichtung mindestens innerhalb eines bestimmten Winkelbereichs schwenkbar an der Transportbandanordnung (51) gelagert sind.

11. Vorrichtung nach den Ansprüchen 1 bis 10, dadurch gekennzeichnet, dass eine Magnetanordnung (21, 22) vorgesehen ist, um ferromagnetische Behältnisse (2) auf die Tragflächen (3) zu ziehen.

12. Vorrichtung nach Anspruch 11, dadurch gekennzeichnet, dass die Tragflächen durch Magnetanordnungen gebildet sind.

13. Vorrichtung nach Anspruch 11, dadurch gekennzeichnet, dass die Magnetanordnung mindestens einen stationären Magnet (21, 22) umfasst, an der den Tragflächen (3) abgekehrten Seite der Transportbandanordnung (1).

14. Vorrichtung nach Anspruch 11 oder 13, dadurch gekennzeichnet, dass eine ferromagnetische Anordnung (26) an der Transportbandanordnung (1) vorgesehen ist, um sie (1) durch die Magnetanordnung auf eine Unterlage (29) zu ziehen.

15. Vorrichtung nach den Ansprüchen 11, 13 oder 14, dadurch gekennzeichnet, dass die Magnetanordnung Magnete (21, 22) auf der den Transportflächen (3) abgekehrten Seite der Transportbandanordnung (1), mit unterschiedlicher Polarität angeordnet, umfasst, wobei vorzugsweise je Magnete auf den den beiden Transportflächen (3) abgekehrten Seiten der Transportbandanordnung (1) angeordnet sind und zwei sich quer zur Transportrichtung gegenüberliegende Magnete (21, 22) unterschiedliche Polarität haben.

16. Vorrichtung nach den Ansprüchen 11, 13, 14 oder 15, dadurch gekennzeichnet, dass die Magnetanordnung mindestens eine im Querschnitt u-förmige Magnetanordnung (21, 22, 24) umfasst, deren Schenkelpole je an einem einer Tragfläche (3) abgekehrten Bereich der Transportbandanordnung (1) liegen.

17. Vorrichtung nach den Ansprüchen 11 bis 16, dadurch gekennzeichnet, dass die Magnetanordnung mindestens ein Permanentmagnet umfasst.

18. Verwendung der Vorrichtung, nach mindestens einem der Ansprüche, 1 bis 17 für eine Dosennahtbeschitungsanlage.

## Claims

1. A device for the conveying of containers without changing their position by a conveyor belt arrangement consisting of two endless belt conveyors arranged parallel to each other, characterised by the fact that two flat conveyor belts (1) with parallel, convex carrying surfaces (3) are provided to allow for different container cross-sectional contours, in which the convex carrying surfaces (3) are continuously curved across the conveying direction.

2. A device according to Claim 1, characterised by the fact that the curve radius (20) of the convex carrying surfaces (3) is considerable greater than the thickness (d) of the flat conveyor belt arrangement (1) in the area of the carrying surfaces (3).

3. A device according to Claim 1 or Claim 2, characterised by the fact that the flat conveyor belt arrangement comprises two flat conveyor belts (1) which are arranged parallel to each other and also preferably situated on the same level, each of which include convex carrying surfaces (3) and run at the same speed.

4. A device according to Claims 1, 2 or 3, characterised by the fact that the convex carrying surfaces (3) are profiled.

5. A device according to Claims 1, 2, 3 or 4, characterised by the fact that at least one of the surfaces (32, 35) facing away from the convex carrying surfaces (3) positively engages in at least one drive roller (33).

6. A device according to Claim 3, characterised by the fact that at least one flat conveyor belt (41) is laterally displaceable at right angles to the conveying direction.

7. A device according to Claim 3 or Claim 6, characterised by the fact that at least one conveyor belt (42) is mounted in such a way that it can swivel around an axis (46) running parallel to the conveying direction.

8. A device according to Claims 3 to 7, characterised by the fact that guide devices (25) are arranged at the side of the conveyor belts to prevent the conveyor belts (1) from locally veering out to the side at right angles to the conveying direction.

9. A device according to Claims 1 to 8, characterised by the fact that the convex carrying surfaces are formed by segments (52) arranged in line one after the other along the flat conveyor belt arrangement (51).

10. A device according to Claim 9, characterised by the fact that the segments (52) are mounted on the conveyor belt arrangement (51) in such a way that they can swivel at right angles to the conveying direction at least within the area of a certain angle.

11. A device according to Claims 1 to 10, characterised by the fact that a magnet arrangement (21, 22) is provided in order to draw ferromagnetic containers (2) onto the carrying surfaces (3).

12. A device according to Claim 11, characterised by the fact that the carrying surfaces are formed by magnet arrangements.

13. A device according to Claim 11, characterised by the fact that the magnet arrangement comprises at least one stationary magnet (21, 22) on the side of the conveyor belt arrangement (2) facing away from the carrying surfaces (3).

14. A device according to Claim 11 or Claim 13, characterised by the fact that a ferromagnetic arrangement (26) is provided on the conveyor belt arrangement (1) to draw it (1) by the magnet arrangement onto a base (29).

15. A device according to Claims 11, 13 or 14, characterised by the fact that the magnet arrangement comprises magnets (21, 22) with differing polarity, arranged on the side of the conveyor belt arrangement (1) facing away from the conveying surfaces (3), whereby for preference magnets are arranged on the sides of the conveyor belt arrangement (1) facing away from the conveying surfaces (3) and two magnets placed opposite each other across the conveying direction (21, 22) have differing polarity.

16. A device according to Claims 11, 13, 14 or 15, characterised by the fact that the magnet arrangement comprises at least one magnet arrangement of U-shaped cross-section (21, 22, 24) the side poles of which each lie on a carrying surface (3) facing away from the area of the conveyor belt arrangement (1).

17. A device according to Claims 11 to 16, characterised by the fact that the magnet arrangement comprises at least one permanent magnet.

18. Use of the device 1 to 17 for a can joint coating plant.

## Revendications

1. Dispositif pour transporter des récipients en position immuable comprenant un ensemble de bandes transporteuses, comprenant deux bandes transporteuses sans fin disposées parallèlement l'une à côté de l'autre, caractérisé en ce qu'il est prévu deux bandes transporteuses plates (1) qui possède des surfaces porteuses parallèles convexes (3) pour tenir compte des différences de profil de la section transversale des récipients, les surfaces porteuses convexes (3) étant incurvées avec une courbure sensiblement constante transversalement à la direction du transport.

2. Dispositif selon la revendication 1, caractérisé en ce que le rayon de courbure (20) des surfaces porteuses convexes (3) est sensiblement plus grand que l'épaisseur (b) de l'ensemble de bandes transporteuses plates dans la région des surfaces porteuses (3).

3. Dispositif selon la revendication 1 ou 2, caractérisé en ce que l'ensemble de bandes transporteuses plates comprend deux bandes transporteuses plates (1) qui sont disposées parallèlement entre elles, de préférence dans un même plan, comprennent chacune une surface porteuse convexes (3) et défilent à la même vitesse.

4. Dispositif selon une des revendications 1, 2 et 3, caractérisé en ce que les surfaces porteuses convexes (3) sont profilées.

5. Dispositif selon une des revendications 1, 2, 3 et 4, caractérisé en ce qu'au moins une surface (32, 35) de l'ensemble de bandes transporteuses qui est à l'opposé des surfaces porteuses convexes (3) est en prise par complémentarité de formes avec au moins un rouleau d'entraînement (33).

6. Dispositif selon la revendication 3, caractérisé en ce qu'au moins une bande transporteuse plate (41) peut se décaler latéralement transversalement à la direction du transport.

7. Dispositif selon la revendication 3 ou 6, caractérisé en ce qu'au moins une bande transporteuse (41) est montée pour pouvoir basculer autour d'un axe (45) qui s'étend parallèlement à la direction du transport.

8. Dispositif selon les revendications 3 à 7, caractérisé en ce que, latéralement aux bandes transporteuses, sont disposés des dispositifs de guidage (25) qui empêchent les bandes transporteuses (1) de se déporter latéralement par endroits, transversalement à la direction du transport.

9. Dispositif selon les revendications 1 à 8, caractérisé en ce que les surfaces porteuses convexes sont formées par des segments (52) alignés les uns à côté des autres le long de l'ensemble de bandes transporteuses (51).

10. Dispositif selon la revendication 9, caractérisé en ce que les segments (52) sont montés sur l'ensemble de bandes transporteuses (51) de façon à pouvoir s'incliner transversalement à la direction du transport, au moins dans les limites d'un intervalle angulaire déterminé.

11. Dispositif selon les revendications 1 à 10, caractérisé en ce qu'il est prévu un dispositif magnétique (21, 22) pour attirer les récipients ferromagnétiques (2) contre les surfaces porteuses (3).

12. Dispositif selon la revendication 11, caractérisé en ce que les surfaces porteuses sont constituées par des dispositifs magnétiques.

13. Dispositif selon la revendication 11, caractérisé en ce que le dispositif magnétique comprend au moins un aimant fixe (21, 22) contre la surface de l'ensemble de bandes transporteuses (1) qui est à l'opposé des surfaces porteuses (3).

14. Dispositif selon la revendication 11 ou 13, caractérisé en ce qu'un dispositif ferromagnétique (26) est prévu sur l'ensemble de bandes transporteuses (1) pour attirer cet ensemble (1) contre un support (29) à l'aide du dispositif magnétique.

15. Dispositif selon une des revendications 11, 13 et 14, caractérisé en ce que le dispositif magnétique comprend des aimants (21, 22) disposés sur la face de l'ensemble de bandes transporteuses (1) qui est à l'opposé des surfaces de transport (3), et qui ont des polarités différentes, des aimants étant disposés de préférence sur les faces de l'ensemble de surfaces transporteuses (1) qui sont à l'opposé des deux bandes de transport (3), et deux aimants (21, 22) qui sont mutuellement opposés, transversalement à la direction du transport, ayant des polarités différentes.

16. Dispositif selon une des revendications 11, 13, 14 et 15, caractérisé en ce que le dispositif magnétique comprend au moins un dispositif magnétique (21, 22, 24) présentant en section transversale la forme d'un U et dont les pôles des branches sont disposés chacun contre une région de l'ensemble de bandes transporteuses (1) qui est à l'opposé d'une surface porteuse (3).

17. Dispositif selon les revendications 11 à 16, caractérisé en ce que le dispositif magnétique comprend au moins un aimant permanent.

18. Utilisation du dispositif selon au moins une des revendications 1 à 17 dans une installation de revêtement du joint des boîtes de conserve.

FIG 1

FIG 2

FIG. 3

FIG. 4a

FIG. 4

FIG. 5a

FIG. 5

FIG. 6

FIG. 7

FIG. 8

FIG. 9

FIG. 10

FIG. 11

FIG. 12

FIG. 13

FIG. 14

FIG. 15